# FASCICULE DE BREVET EUROPEEN

(11) **EP 1 934 279 B1**
(45) Date de publication et mention de la délivrance du brevet: **01.05.2013**
(21) Numéro de dépôt: 06792368.0
(22) Date de dépôt: 04.10.2006
(51) Int. Cl.: C08K 5/21, C08L 95/00

(54) **COMPOSITIONS BITUME-POLYMERE**
BITUMEN/POLYMER-ZUSAMMENSETZUNGEN
BITUMEN/POLYMER COMPOSITIONS

(30) Priorité: 04.10.2005 FR 0510142
(43) Date de publication de la demande: 25.06.2008
(73) Titulaire: TOTAL RAFFINAGE MARKETING, 92800 Puteaux (FR)
(72) Inventeur: MARIOTTI, Sophie, F-78220 Viroflay (FR); DREESEN, Sylvia, 25712 Burg (DE)
(74) Mandataire: Cabinet Plasseraud
(86) Numéro de dépôt international: PCT/EP2006/009615
(87) Numéro de publication internationale: WO 2007/039295

(56) Documents cités:
- EP-A- 0 157 210
- EP-A- 0 919 588
- FR-A- 2 042 285
- FR-A1- 2 739 863

## Description

La présente invention est relative aux compositions bitume-polymère, de préférence aux mastics, utilisées dans le domaine des applications industrielles, notamment dans la fabrication de revêtements intérieurs ou extérieurs, employés pour l'étanchéité et/ou l'amortissement de vibrations et/ou l'isolation thermique et/ou phonique et/ou la protection contre le feu (ignifugation).

De tels revêtements à base de compositions bitume-polymère, de préférence chargées pour les applications mastics, sont notamment mis en oeuvre dans le bâtiment (extérieur/intérieur), dans les carrosseries d'automobiles ou dans les machines de production de froid (réfrigérateurs, congélateurs, climatiseurs, etc.).

L'invention concerne notamment l'utilisation d'au moins un ester phosphorique EP pour augmenter la valeur absolue des bornes inférieure et supérieure de la plage de plasticité d'une composition bitume-polymère anhydre, conformément aux revendications.

Plus précisément, l'invention concerne les applications aux fins susvisées de compositions bitume-polymère comportant généralement:
■ au moins un liant bitumineux (à savoir par exemple une suspension colloïdale de molécules d'asphaltènes dans une phase huileuse)
■ au moins un polymère et,
■ suivant une modalité optionnelle mais néanmoins préférée, au moins une charge, de préférence, pulvérulente.

Outre les applications desdits compositions bitume-polymère, l'invention inclut également les procédés de préparation desdits compositions bitume-polymère, notamment celles dédiés à formuler des mastics.

S'agissant plus spécialement des applications industrielles dans le bâtiment, sont notamment concernés:
- les revêtements intérieurs de bâtiments: revêtements de sol (tapis, moquettes sous formes de bandes ou de dalles, chapes intérieures, parquets -par exemple flottants-) ou revêtements muraux,
- et les revêtements extérieurs de bâtiments: membranes d'étanchéité (ou chapes) pour les toits, les terrasses, les façades, les murs, etc.

Pour les membranes d'étanchéité, on en distingue deux types disponibles sur le marché.

Le premier type comprend les membranes d'étanchéité appliquées par chauffage [par exemple à flamme nue ou à l'aide de résistance(s)], de façon à ramollir, voire liquéfier, le bitume et ainsi assurer la liaison de la membrane avec le support extérieur (souvent en béton) pour les toitures, terrasses et/ou façades.

Le deuxième type de membranes d'étanchéité comprend les membranes d'étanchéité auto-adhésives, appliquées par simple pression sur les supports extérieurs de bâtiments tels que par exemples, toitures, terrasses, façades.

Les compositions bitume-polymère employées dans ces deux types de revêtements extérieurs et intérieurs comprennent du bitume (ou liant bitumineux) *stricto sensu,* des charges plus ou moins fines, et éventuellement un ou plusieurs (co)polymères.

Pour préparer ces membranes d'étanchéité et/ou des éléments de revêtements de sols (tapis, moquettes en dalles ou en bandes enroulées), les compositions bitume-polymère formulées en mastic (donc en présence de charges), sont appliquées sur un support fibreux ou non fibreux, tissé ou non tissé; par exemple: un mat ou un voile de fibres inorganiques telles que des fibres de verre, un voile de fibres organiques de (co)polymère(s) synthétique(s) telles que les fibres de polyester, ou un voile comprenant un mélange de fibres organiques et inorganiques. Les techniques usuellement employées sont des techniques d'enduction de surface et/ou d'imprégnation dans la masse du support fibreux tissé ou non.

A ce jour, les membranes d'étanchéité extérieures disponibles sur le marché, par exemple sous forme de bandes enroulées, sont appliquées sur les surfaces à traiter, lorsque les conditions extérieures sont suffisamment clémentes pour permettre la pose.

La pose consiste à faire adhérer les bandes de membranes d'étanchéité par chauffage, de manière à ramollir la matrice et/ou la surface de la membrane faite de composition (de préférence d'un mastic) bitume-polymère. Après avoir été ainsi collées sur le sol de la surface à traiter, les bandes de membranes d'étanchéité sont soudées entre elles.

Pour faciliter la pose et pour améliorer les propriétés d'usage des revêtements posés, il serait particulièrement intéressant de pouvoir disposer d'une composition bitume-polymère, dont le comportement à "chaud" serait amélioré.

Sauf contre-indication express, le qualificatif "chaud" renvoie, au sens de l'invention, à une gamme de températures comprise, par exemple, entre 60 °C et 180°C.

Cette amélioration du comportement à "chaud" peut notamment s'exprimer au regard, d'une part, de la viscosité à "chaud" et, d'autre part, au regard de la déformabilité à "chaud".

S'agissant de la viscosité à "chaud" de cette composition bitume-polymère, elle gagnerait à être augmentée. Cela équivaut à accroître la température (T_{BA)} bille-anneau de la composition bitume-polymère. L'intérêt d'accroître la T_{BA} de la composition bitume-polymère, notamment formulée en mastic, est d'améliorer en particulier, d'une part, la résistance du revêtement aux températures élevées et notamment le fluage, le ressuage.., et, d'autre part, l'élasticité du revêtement.

La viscosité à "chaud" de la composition bitume-polymère, notamment formulée en mastic, ne doit cependant pas être exagérément augmentée, de manière à ce qu'elle puisse être suffisamment ramollie et à pouvoir ainsi être étalée sur la membrane d'étanchéité et/ou sur la surface à revêtir, et/ou de manière à pouvoir coller la membrane d'étanchéité contenant ladite composition sur la surface à revêtir. Il est en outre crucial que ce ramollissement soit obtenu sans exercer un chauffage trop intense qui risquerait de détériorer les qualités intrinsèques de la membrane d'étanchéité.

S'agissant de la déformabilité à "chaud", ce problème est observé lors de l'application après chauffage et/ou en été, donc dans des conditions de températures relativement élevées, par exemple supérieures à 40°C, la membrane d'étanchéité collée est ou devient molle, et donc déformable de sorte, qu'elle est sensible à la pression, et en particulier elle est susceptible d'être marquée par les pas des opérateurs ou des poseurs se déplaçant et/ou s'appuyant sur la surface revêtue de la membrane. Ces actions ont pour effet de déformer la membrane et il serait donc souhaitable pour les utilisateurs de supprimer cet inconvénient, sans pour autant compliquer la pose, ni augmenter la température d'adhésivité au risque de détériorer le matériau. Pour pouvoir résoudre ce problème technique, il conviendrait de rendre la composition bitume-polymère davantage rigide, de sorte que lors du refroidissement de la membrane après avoir été chauffée pour être posée et collée sur le support, elle devienne résistante notamment à la déformation sous charge dynamique et également statique, dans les conditions de température ambiante régnant lors de la pose et lors de période d'élévation de températures notamment supérieure à 40°C.

Une autre attente de la profession serait dans le même temps d'améliorer également le comportement à "froid" de ladite composition bitume-polymère, notamment formulée en mastic.

Sauf contre-indication expresse, le qualificatif "froid" renvoie, au sens de l'invention, à une gamme de températures comprise, par exemple, entre -20° et 40°C.

En effet, il importe que la composition bitume-polymère conserve, à "froid", voire à température ambiante, une certaine élasticité de manière à résister, après application notamment sous sa forme mastic, à la fissuration thermique (lézarde, cassure, fissure, craquelure, coupure, etc.).

Cette élasticité à "froid", voire à température ambiante, de la composition bitume-polymère est également hautement souhaitable au regard de la manipulation des membranes d'étanchéité contenant ladite composition.

L'amélioration de la résistance à la fissuration thermique se mesure au travers de la température de pliabilité à "froid" (T_{PF}), mesurée selon un test de pliabilité répondant par exemple à la norme DIN EN 1109.

Il est fortement souhaitable que l'amélioration du comportement à "chaud" et à "froid" des compositions bitume-polymère, soit obtenue aussi bien avant qu'après vieillissement.

Au final, le but recherché dans la recherche d'une amélioration du comportement à "chaud" et à "froid" des compositions bitume-polymère, de préférence formulées en mastics, pourrait se traduire dans un allongement de la durée de vie du revêtement obtenu par mise en oeuvre de ladite composition (de préférence du mastic) bitume-polymère.

On peut ainsi définir la plage de plasticité des compositions bitume-polymère, plage dont la borne inférieure est la température de pliabilité à froid T_{PF} et dont la borne supérieure est la température bille anneau T_{BA}. Ces deux températures et leurs méthodes de mesures sont définies ci-dessus. Cette plage de plasticité peut également être considérée comme une plage thermique d'utilisation de la composition bitume-polymère anhydre.

De surcroît, l'éventuelle obtention d'un gain en termes de comportement à "chaud" et à "froid" de la composition bitume-polymère, de préférence formulées en mastics, pourrait permettre de diminuer la quantité d'additif polymère mise en oeuvre, tout en conservant des propriétés physico-chimiques identiques à celles obtenues avec des quantités plus importantes de polymère. Cette diminution de la concentration en additif polymère pourrait avoir un impact économique favorable.

La problématique exposée ci avant pour les membranes d'étanchéité vaut également pour d'autres types de revêtements et, notamment, les revêtements intérieurs tels que les revêtements de sols de type moquettes en bandes ou en dalles.

En effet, il serait également souhaitable de disposer de revêtements intérieurs comprenant d'une composition bitume-polymère présentant, à la fois, une viscosité accrue, mais sans excès, aux températures élevées de pose des revêtements et une certaine rigidité à des températures moins élevées d'utilisation e.g. à 40-60°C. Une telle rigidité permettrait en effet, concrètement, d'éviter le fluage de la composition bitume-polymère, préférentiellement formulée en mastic, dans le cadre de stockage (conditionnement, empilement, augmentation de température) de revêtements intérieurs, par exemple dalles de moquettes, constitués en partie par ladite composition. Cette rigidité permettrait de garantir aux revêtements intérieurs en question une stabilité dimensionnelle liée aux élévations de température et une stabilité dimensionnelle liée à l'application d'une charge statique ou dynamique; ce qui aurait pour effet de minimiser voire éliminer le fluage de la composition bitume-polymère.

Par ailleurs, les compositions bitume-polymère connues, utilisées dans le domaine industriel (exemple: mastic) et/ou dans le domaine routier (ex: revêtement routier) manque de stabilité physico-chimique au stockage: déphasage, décantation. Des perfectionnements à cet égard seraient donc appréciables.

Le brevet européen EP-B-0 919 588 concerne des émulsions aqueuses à base de bitume, utilisées en particulier dans le domaine de l'industrie routière. Plus précisément, ce brevet européen divulgue une émulsion bitumineuse aqueuse présentant de bonnes propriétés d'adhésivité et de stabilité au stockage et dans laquelle la phase bitume comprend un additif constitué par un dérivé d'ester phosphorique, par exemple un diester éthoxylé porteur de chaînes dérivées d'alcools gras comprenant un bloc polyéthylène glycol et un bloc phényle substitué par différents radicaux iso-C₉H₁₉. L'indice d'acide de ester est e.g. compris entre 89 et 98 et son point éclair est de 230°C. Cet additif présent par exemple à raison de 0,2% en poids par rapport à la base bitume, augmente sensiblement, selon ce brevet, le niveau d'adhésivité, la stabilité au stockage et la vitesse de rupture de l'émulsion bitumineuse. Ce brevet est limité aux émulsions bitumineuses et par conséquent ne concerne nullement les enrobés bitumineux à chaud, qui sont des compositions anhydres.

Sauf contre-indication expresse, l'adjectif "anhydre" employé pour qualifier des compositions bitumineuses, désigne, au sens du présent exposé, des compositions bitumineuses qui ne sont pas des émulsions et qui ne contiennent pas d'eau, tout au plus éventuellement à l'état de traces.

Les émulsions bitumineuses selon l'EP-B-0 919 588 sont utilisables à froid, c'est-à-dire à une température comprise par exemple entre 10° et 50°C (plus précisément à une température ambiante), contrairement aux compositions bitumineuses anhydres qui sont utilisables à chaud, c'est-à-dire à des températures strictement supérieures à 50°C et avantageusement inférieures à 300°C.

Ce document ne fait pas état d'une quelconque augmentation de la température bille-anneau T_{BA} pas plus que dé l'abaissement de la température de pliabilité à froid (T_{PF}), pour les émulsions bitumineuses considérées. L'enseignement de ce brevet EP n'est donc d'aucune utilité pour résoudre le problème posé pour les compositions bitume-polymère et plus particulièrement pour les mastics formulés à partir desdites compositions bitume-polymère.

FR2739863-A1 enseigne notamment à l'homme du métier que l'ajout d'acide polyphosphorique à une composition bitume/polymère réticulée améliore la plage de plasticité de ladite composition bitume/polymère réticulée (page 21, lignes 9-15).

Dans ce contexte, l'un des objectifs essentiels de la présente invention est de proposer une composition bitume-polymère:
(i) dont la viscosité à "chaud" serait augmentée sans excès,
(ii) résistant à la déformation sous charge dynamique et également statique dans les conditions de température ambiante régnant lors de la pose et lors de période d'élévation de températures, notamment lorsque celles-ci deviennent supérieures à 40°C,
(iii) présentant en outre des propriétés de tenue à "froid" et de stabilité dimensionnelle en cas de variations thermiques et de charges importantes,
(iii) et qui soit stable au stockage avant d'être utilisée.

Un autre objectif essentiel de la présente invention est de proposer un revêtement comprenant une composition bitume-polymère qui lui confère:
(i') une résistance à la déformation sous charge dynamique et également statique, dans les conditions de température ambiante régnant lors de la pose et lors de périodes d'élévation de températures, notamment lorsque celles-ci deviennent supérieures à 40°C,
(ii') et des propriétés de tenue à "froid" et de stabilité dimensionnelle en cas de variations thermiques et de charges importantes.

Cette composition est tout aussi bien adaptée et adaptable en formulations pour des applications industrielles, dans lesquelles lesdites formulations se présentent e.g. sous la forme de mastics, ou en formulations pour des applications routières, dans lesquelles lesdites formulations se présentent e.g. sous la forme d'enrobés bitumineux.

Ces objectifs sont atteints par l'invention qui concerne tout d'abord l'utilisation d'au moins un ester phosphorique ou thiophosphorique EP pour élargir la plage de plasticité d'une composition bitume-polymère anhydre du type de celles comprenant au moins un bitume B, éventuellement au moins une charge C et au moins un polymère D réticulable ou non réticulable. En d'autres termes, la borne inférieure (température de pliabilité à froid TPF, négative, en °C) de la plage de plasticité de la composition bitume-polymère anhydre est diminuée, et/ou la borne supérieure (température bille anneau TBA, positive, en °C) de la plage de plasticité de la composition bitume-polymère anhydre est augmentée. Selon une autre définition, l'invention concerne l'utilisation d'au moins un ester phosphorique et/ou thiophosphorique EP à titre d'agent promoteur de la viscosité à chaud et/ou de la résistance à la fissuration thermique à froid de ladite composition bitume-polymère anhydre.

L'utilisation de l'ester EP dans une telle composition bitume-polymère anhydre permet d'accroître significativement la T_{BA} de la composition et de diminuer sa T_{PF}. La composition est stable au stockage et présente également les avantages additionnels suivants, parmi d'autres:
- compatibilité des composants le constituant; notamment compatibilité entre l'additif A avec le polymère D et le bitume B choisi,
- pas de mauvaises odeurs à "chaud",
- préparation et utilisation aisées, toxicité réduite, faible coût de revient et performance améliorées en termes de propriétés mécaniques et physiques finales pour les revêtements obtenus à partir dudit mastic,
- fiabilité dans le temps compatible avec la garantie décennale en cours dans le domaine du bâtiment.

Au sens de l'invention, EP comprend au moins un monoester et/ou au moins un polyester d'acide phosphorique ou thiophosphorique. C'est ainsi que l'additif EP peut, selon une variante, se présenter sous la forme d'un mélange de monoester(s) et/ou de polyester(s). Par exemple, il peut s'agir d'un mélange de monoester(s), de diester(s) et de triester(s) d'acide phosphorique.

Avantageusement, EP est un ester d'acide orthophosphorique (phosphorique), orthothiophosphorique, pyrophosphorique, pyrothiophosphorique, métaphosphorique (polyphosphorique) ou polythiophosphorique.

Suivant une modalité préférée de l'invention, EP comprend au moins un monoester et/ou au moins un polyester d'acide phosphorique ou thiophosphorique et d'au moins un alcool gras, ce dernier étant de préférence choisi parmi ceux comprenant au moins un bloc alkyle et au moins un bloc polyoxyde d'alkylène, et mieux encore polyoxyde d'éthylène et/ou de propylène.

Suivant une autre modalité préférée de l'invention, EP répond à la formule générale (I) suivante: 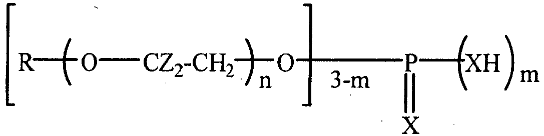 dans laquelle: les radicaux X identiques ou différents entre eux correspondent à un atome d'oxygène; les radicaux Z identiques ou différents entre eux correspondent à l'hydrogène ou -CH₃; m = 0, 1 ou 2 ; n = 0 ou un nombre entier allant de 1 à 10 ; et R est une chaîne hydrocarbonée, de préférence une chaîne aliphatique linéaire ou ramifiée saturée ou insaturée, et, plus préférentiellement encore une chaîne comprenant soit au moins un groupe alkyle saturé ou insaturé comportant une ou plusieurs insaturations et un nombre d'atomes de carbone compris entre 6 et 24 (de préférence 13 et 20), soit au moins un groupe phényle, soit encore au moins l'un des groupes précédents substitués.

Selon une variante, R peut comprendre au moins un groupement alicyclique, situé au sein de la chaîne principale et/ou sous forme de groupements substitués.

Selon une autre variante, R peut être une chaîne hydrocarbonée issue d'au moins un acide gras comprenant, par exemple de 6 à 24 (de préférence de 13 à 20 atomes de carbone). Cet acide gras précurseur peut être, e.g.: l'acide palmitique, stéarique, linoléique ou copraïque

De préférence, la ou les chaîne(s) hydrocarbonée(s) de l'ester possède(nt) un nombre de groupements alcoxy -de préférence éthoxy- compris entre 3 et 6.

Plus particulièrement, il est avantageux que dans la formule (1) au moins une chaîne hydrocarbonée de l'ester comprenne de préférence de 15 à 18 atomes de carbone.

Avantageusement, EP est un ester phosphorique qui possède un indice d'acide compris entre 90 et 240 et un point d'éclair (mesuré selon la norme NFM 07-019, en vase clos) compris entre 200 et 230° C.

Selon une variante intéressante, EP est utilisé à des taux inférieurs ou égaux à 1 % et, de préférence, compris entre 0,01 et 2 %; et mieux encore entre 0,05 et 1, en poids par rapport à la base bitume B.

La composition bitume-polymère anhydre a notamment pour caractéristique avantageuse :
■ une température de ramollissement (ou température bille-anneau) T_{BA} (mesurée en °C selon la norme DIN EN 1427), telle que : 80≤T_{BA} ≤ 150, de préférence 100 ≤ T_{BA} ≤ 130;
■ et/ou une température de pliabilité à "froid" T_{PF} (mesurée en °C selon la norme DIN EN 1109) telle que: T_{PF} < -10, de préférence -50 ≤ T_{PF} < -10, et, plus préférentiellement encore -35 ≤ T_{PF} ≤ -15.

Dans le cadre de l'invention, le bitume B peut être constitué par un seul type de bitume ou par un mélange de bitumes, tels que par exemple ceux que l'on utilise en général dans la préparation des compositions bitume/polymère. Le bitume B est choisi parmi les bitumes qui possèdent une pénétrabilité, suivant la norme EN 1426, comprise entre 5 et 500.

Ces bitumes peuvent être des bitumes soufflés ou semi-soufflés, voire même certaines coupes pétrolières ou des mélanges de bitumes et de distillats sous vide (distillation directe ou de distillation sous pression réduite).

Le bitume B peut être un bitume naturel ou un bitume de l'industrie pétrolière, mais aussi ce qu'on appelle un bitume clair, c'est-à-dire un bitume quasiment sans asphaltènes.

Pour les revêtements extérieurs, en particulier les membranes d'étanchéité, le bitume B de la composition bitume-polymère selon l'invention, est sélectionné parmi ceux ayant une pénétrabilité, suivant la norme EN 1426, comprise entre 140 et 220.

Pour les revêtements intérieurs, en particulier les dalles de moquettes, le bitume B du composition (de préférence un mastic) bitume-polymère selon l'invention, est sélectionné parmi ceux ayant une pénétrabilité, suivant la norme EN 1426, comprise entre 10 et 50.

La charge C est généralement choisie parmi les charges minérales particulaires qui comprennent des fines, à savoir des particules de dimensions inférieures 80 µm, et éventuellement des agrégats, c'est-à-dire des particules de dimensions comprises entre 80 et 2000 µm, et éventuellement des gravillons, c'est-à-dire des particules de dimensions supérieures à 2000 µm, le sable, et/ou le carbonate de calcium et/ou l'alumine étant particulièrement préférés.

Cette charge C peut aussi être constituée (au moins en partie) par des charges fibreuses, lesquelles sont avantageusement choisies dans le groupe comprenant les fibres minérales -de préférence les fibres de verre-, les fibres de carbone, les fibres synthétiques -de préférence les fibres de polyesters, de polyoléfines ou de polyamides- et leurs mélanges.

De manière plus préférée, la charge C a une granulométrie comprise entre 0,001 et 300 µm, de préférence entre 1 et 250 µm. De manière encore plus préférée, la charge C a une surface BET inférieure à 100 m²/g.

Le polymère D que l'on utilise en général pour préparer la composition bitume-polymère, de préférence un mastic, est présent en une quantité comprise entre 0,5 et 25 % rapportée au poids de la formulation de mastic.

Ce polymère D peut être choisi généralement parmi de nombreux type de polymères, réticulables ou non-réticulables.

Il peut notamment être choisi à base d'au moins un type de copolymère choisi parmi :
(i) les copolymères statistiques ou séquencés de styrène avec un diène conjugué, de préférence choisi dans le groupe comprenant: butadiène, isoprène, chloroprène, butadiène carboxylé et isoprène carboxylé,
(ii) le groupe d'élastomères comprenant: le polyisoprène, le polybutadiène, le caoutchouc butyle,
(iii) et les terpolymères éthylène/ propylène/diène.

De préférence, ce polymère D consiste en un ou plusieurs copolymères choisis parmi les copolymères séquencés, notamment di- ou triséquencés, avec ou sans charnière statistique, de styrène et de butadiène, de styrène et d'isoprène, de styrène et de chloroprène, de styrène et de butadiène carboxylée, ou encore de styrène et d'isoprène carboxylée.

Plus particulièrement, le polymère D est réticulé au sein de la composition de composition (de préférence un mastic)à l'aide d'un agent de couplage et est choisi avantageusement parmi les copolymères de styrène et de diène conjugué avec une teneur pondérale en styrène allant de 5 % à 50 %.

A noter que les copolymères D statistiques ou séquencés de styrène et d'un diène se dissolvent très facilement dans le bitume B et confèrent à ce dernier d'excellentes propriétés mécaniques et dynamiques et notamment de très bonnes propriétés de viscoélasticité.

La masse moléculaire moyenne en poids du copolymère de styrène et de diène conjugué, et plus généralement celle des copolymères D mentionnés ci avant, peut être comprise, par exemple, entre 10 000 et 600 000 Daltons et se situe de préférence entre 30 000 et 400 000 Daltons.

A titre d'exemples de polymères D pour bitume, on peut citer les élastomères tels que les copolymères à blocs du styrène et du butadiène SB, les copolymères à blocs styrène-butadiène-styrène SBS, les copolymères à blocs styrène- butadiène-styrène en étoile SBS*, les copolymères styrène-isoprène-styrène SIS, les copolymères polyéthylène-acétate de vinyle EVA, les copolymères polyéthylène-acétate de butyle EBA, les polyoléfines telles que les polyéthylènes PE et PEHD, le polypropylène PP, les copolymères du styrène, éthylène, butylène et styrène SEBS, les copolymères styrène-butadiène-rubber SBR, etc.

Dans le cas où le polymère D de l'invention est choisi parmi les polymères D réticulables, on emploie un agent de couplage (ou de réticulation) Dc pour assurer et/ou faciliter la réticulation.

Cet agent de couplage Dc peut être de nature très variée et est choisi en fonction du(es) type(s) de polymère(s) D contenu(s) dans la composition (de préférence un mastic) bitume-polymère selon l'invention.

En général, l'agent Dc est choisi dans le groupe des accélérateurs de vulcanisation donneurs de soufre et/ou des accélérateurs de vulcanisation non donneurs de soufre. Les premiers sont préférés, et en particulier parmi eux, ceux constitués par le soufre élémentaire, les polysulfures d'hydrocarbyle et les mélanges de tels produits entre eux. Dans ce cas, l'agent de couplage est présent en quantité efficace pour fournir du soufre libre représentant entre 0,1 et 20 % du poids du polymère réticulable D.

L'agent de couplage Dc pourra notamment être au moins l'un des agents de couplage décrits dans EP-739 386-B1, EP-799 280-B1 et EP-837 910-B1.

Le soufre élémentaire susceptible d'être utilisé pour constituer, en partie ou en totalité, l'agent de couplage Dc est avantageusement du soufre en fleur et de préférence du soufre cristallisé sous la forme orthorhombique et connu sous le nom de soufre alpha.

Les polysulfures d'hydrocarbyle susceptibles d'être utilisés pour former au moins une partie de l'agent de couplage Dc répondent à la formule générale:

R¹-(S)ᵥ-(R²-(S)ᵥ-)_{w}-R³

dans laquelle R¹ et R² désignent chacun un radical hydrocarboné monovalent, saturé ou insaturé, en C₁ à C₂₀ ou sont reliés entre eux pour constituer un radical hydrocarboné divalent en C₂ à C₂₀, saturé ou insaturé, formant un cycle avec les autres groupements d'atomes associés dans la formule, R³ est un radical hydrocarboné divalent, saturé ou insaturé, en C₁ à C₂₀, les -(S)v- représentent des groupements divalents formés chacun de v atomes de soufre, les v désignant des nombres entiers allant de 1 à 6 avec au moins l'un des v égal ou supérieur à 2, et w représente un nombre entier prenant les valeurs de zéro à 10.

D'autres polysulfures utilisables sont par exemple tels que les trisulfures de diphényle, trisulfures de dibenzyle, tétrasulfures de diphényle, tétrasulfures d'orthotolyle, tétrasulfures de dibenzyle, pentasulfures de dibenzyle, pentasulfures de diallyle, et les tétraméthyltétrathianes.

Comme autres exemples d'accélérateurs de vulcanisation donneurs de soufre on peut encore citer les polysulfures de thiurame, les disulfures d'alkylphénols et les disulfures tels que disulfure de morpholine et N,N'-disulfure de caprolactame.

Les accélérateurs de vulcanisation non donneurs de soufre peuvent être des composés soufrés choisis notamment parmi le mercaptobenzothiazole et ses dérivés, le diphényl-1,3 guanidine, la diorthotolylguanidine, l'oxyde de zinc, les monosulfures de thiurame, et les dithiocarbamates de formule générale [(R⁴ R⁴)N-(C=S)-S]b- Y dans laquelle les R⁴ sont par exemple des radicaux hydrocarbonés en C1-C12, Y représente un métal et b désigne la valence de Y.

Selon un autre de ses aspects, l'invention concerne l'utilisation d'au moins un ester phosphorique EP, tel que défini ci avant, à titre d'agent promoteur de la viscosité à "chaud" et/ou de la résistance à la fissuration thermique à "froid", dans une composition (de préférence un mastic) bitume-polymère anhydre du type de celles comprenant au moins un bitume B, au moins une charge C et au moins un polymère D réticulable ou non réticulable.

Selon encore un autre de ses aspects, l'invention vise un procédé de préparation d'une composition bitume-polymère selon l'invention.

Ce procédé est caractérisé en ce qu'il consiste essentiellement à mettre en contact, en opérant à une température comprise entre 100°C et 230°C et sous agitation pendant une durée d'au moins 5 minutes, le bitume B et/ou le prémélange bitume B / polymère D, l'ester EP et la charge C. Selon un mode préféré de l'invention, l'ester EP est ajouté au bitume avant l'ajout de polymère.

A titre d'exemple quantitatif (en parties en poids par rapport à la masse totale de la composition) de composition bitume-polymère selon l'invention, on peut citer les compositions suivantes:
● [EP] < 5, de préférence 0,01 ≤ [EP] ≤ 2 et plus préférentiellement encore 0,05 ≤ [EP] ≤ 1.
● 100 de [B]
● 0,5 à 25 de [D].

A titre d'exemple pour un mastic formulé à partir de la composition bitume-polymère selon l'invention (en parties en poids par rapport à la masse totale du mastic) on peut citer les formulations suivantes:
● [EP] < 10, de préférence 0,01 ≤ [EP] ≤ 5,0 et plus préférentiellement encore 0,05 ≤ [EP] ≤ 4,0
● 100 de [B]
● 10 à 80 de [C]
● 0,5 à 25 de [D].

Pour des revêtements extérieurs (chapes) : [B] ≥ 50 et [C] ≤ 40, tandis que pour des revêtements intérieurs (dalles) : [B] ≤ 40 et [C] ≥ 60.

L'invention concerne également l'utilisation de la composition (de préférence un mastic) bitume polymère tel que définie supra, pour fixation ou application sur des supports. Les techniques de fixations sur supports sont connues et bien maîtrisées par l'homme de l'art. Il peut s'agir par exemple d'enduction, d'imprégnation, d'aspersion, etc.

Selon encore un autre de ses aspects, l'invention vise un support obtenu selon l'utilisation décrite ci avant

L'invention concerne également les revêtements réalisés à partir des mastics bitume polymère selon l'invention. Ces revêtements peuvent être choisis parmi les revêtements intérieurs ou extérieurs, employés pour l'étanchéité et/ou l'amortissement de vibrations et/ou l'isolation thermique et/ou phonique et/ou la protection contre le feu (ignifugation).

Plus précisément, ces revêtements peuvent être choisis parmi les revêtements intérieurs de bâtiments tels que les revêtements de sol (tapis, moquettes sous formes de bandes ou de dalles, chapes intérieures, parquets -par exemple flottants-), et les revêtements extérieurs de bâtiments telles que les membranes d'étanchéité (ou chapes) pour toits, terrasses, façades et murs.

Selon encore un autre de ses aspects, l'invention vise un revêtement caractérisé en ce qu'il comprend un support ci-dessus défini et comportant de la composition (de préférence du mastic) bitume-polymère selon l'invention.

Selon encore un autre de ses aspects, l'invention vise un revêtement caractérisé en ce qu'il est employé pour l'étanchéité et/ou l'amortissement de vibrations et/ou l'isolation thermique et/ou phonique et/ou la protection contre le feu

L'invention concerne également les revêtements réalisés à partir des compositions bitume-polymère selon l'invention formulées avec ou sans charges C.

Dans le cas de composition sans charge, les revêtements peuvent être choisis par exemple parmi les enduits superficiels et les liants d'imprégnations.

Dans le cas de composition avec charge(s), les revêtements peuvent être choisis par exemple parmi les enrobés bitumineux à chaud ou coulés à froid, et les asphaltes coulés.

L'invention sera mieux comprise et ses avantages illustrées à la lecture des exemples qui suivent.

### EXEMPLES :

### I. Tests

Les caractéristiques rhéologiques et mécaniques des bitumes ou des compositions (de préférence mastics) bitume-polymère sont exprimées selon les références et tests suivants
- Pénétrabilité : exprimée en 1/10 mm suivant la norme NF EN 1426.
- Température de ramollissement bille et anneau T_{BA}: exprimé en °C suivant la norme NF EN 1427.
- Température de pliabilité à "froid" T_{PF}, mesurée en °C selon la norme DIN EN 1109.

### II. Composition des mastics

Les produits mis en oeuvre dans les exemples sont:
- Bitume B neutre et ayant une pénétrabilité à 25°C (1/10 mm) de 160-220 et un point de ramollissement ou température Bille/Anneau T_{BA} supérieure à 35 °C.
- polymère D: SBS 411, commercialisé par FINA.
- Charge C : carbonate de calcium, de granulométrie moyenne d'environ 20 µm et une granulométrie comprise entre 5 à 200.
- Ester phosphorique EP: mélange de mono et diester éthoxylés conforme à l'invention, qui répond à la formule chimique développée (1) ci-dessus, avec X= O, Z=H, H m =1 ou 2, n =3 ou 4, R étant un groupe phényle substitué par différents iso-C₉H₁₉.

### Composition témoin sans EP :

Cette préparation est réalisée à 180 °C, dans un réacteur sous agitation dans lequel on mélange au bitume B (54% du poids total final de la composition) et le polymère D (11% du poids total final de la composition). On mélange pendant environ 2h à environ 190°C (température du mélange).

On introduit ensuite dans le mélange obtenu, la charge C (35% en poids de la composition total). On mélange pendant environ 30 mn à 190°C.

On procède aux mesures de la Température de ramollissement bille et anneau T_{BA} et de la Température de pliabilité à "froid" T_{PF}.

### Composition 1 selon l'invention (0,1% EP):

Cette préparation est réalisée à 180 °C, dans un réacteur sous agitation dans lequel on ajoute au bitume B (53,9% du poids total final de la composition) l'EP (0,1% du poids total final de la composition), et le polymère D (11% en poids total final de la composition).On mélange pendant environ 2h à 190°C.

On introduit ensuite dans le mélange obtenu, la charge C (35% en poids total final de la composition).

On mélange pendant environ 3h en chauffant pendant environ 2h à 180°C.

### Composition 2 selon l'invention (0,3% EP):

Cette préparation est réalisée à 180 °C, dans un réacteur sous agitation dans lequel on ajoute au bitume B (53,7% du poids total final de la composition) l'EP (0,3% du poids total final de la composition), et le polymère D (11% en poids total final de la composition).On mélange pendant environ 2h à 190°C.

On introduit ensuite dans le mélange obtenu, la charge C (35% en poids total final de la composition).

On mélange pendant environ 3h en chauffant pendant environ 2h à 180°C.

### III. Résultats

Les résultats des essais réalisés sur chacun des produits cités dans les exemples précédents sont présentés dans le tableau 2 ci-après.

**TABLEAU 2**

| | Bitume B | Composition témoin | Composition 1 | Composition 2 |
|---|---|---|---|---|
| Bitume B | 100 | 54 | 53,9 | 53,7 |
| Pénétrabilité (°C) | 198 | 198 | 198 | 198 |
| T_{BA} (°C) | 38,6 | 38,6 | 38,6 | 38,6 |
| Ester EP % en poids par rapport au bitume B | 0 | 0 | 0,1 | 0,3 |
| polymère D % en poids par rapport au bitume B | 0 | 11 | 11 | 11 |
| T_{BA} (°C) | - | 118,5 | 113 | 122 |
| T_{PF} (°C) | - | - 10 | **-25** | **-30** |
| Charge C % en poids par rapport au bitume B | 0 | 35 | 35 | 35 |
| T_{BA} (°C) | - | 96 | 116,5 | 119,5 |
| T_{PF} (°C) | - | -10 | **-25** | **-30** |

Les valeurs de pénétrabilité à 25 °C obtenues pour la composition témoin, la composition 1 et la composition 2 sont similaires.

### Commentaires

Avant ajout des charges, on obtient pour les compositions 1 et 2 préparées des valeurs de TBA (augmentation) et TPF (diminution) qui traduisent une amélioration du comportement à chaud et à froid. La valeur absolue de la TBA et de la TPF augmente en présence d'ester EP et de polymère D.

Après ajout de l'ester phosphorique EP, du polymère D et de la charge C, on obtient une T_{BA} de 116,5 et de 119,5 °C pour les compositions 1 et 2 respectivement, versus 96°C pour la composition témoin , soit des augmentations de 21 et 25 % respectivement.

Après ajout de l'ester phosphorique EP et du polymère D, on obtient une T_{PF} de -25°C et de -30°C pour les compositions 1 et 2 respectivement, versus -10°C pour la composition témoin, soit des diminutions de 150 et 200 % respectivement.

Après ajout de l'ester phosphorique EP, du polymère D et de la charge C, on obtient une T_{PF} de -25°C et de -30°C pour les compositions 1 & 2 respectivement, versus -10°C pour la composition témoin , soit des diminutions de 150 et 200 % respectivement.

L'ester EP permet donc d'améliorer significativement les comportements à froid et chaud des compositions bitume-polymère chargées ou non. En d'autres termes, la plage de plasticité des compositions bitume-polymère est élargie : la T_{PF} est diminuée et la T_{BA} augmentée, grâce à l'utilisation d'un ester EP.

## Revendications

1. Utilisation d'au moins un ester phosphorique EP pour élargir la plage de plasticité d'une composition bitume-polymère anhydre, c'est-à-dire la plage dont la borne inférieure est la température de pliabilité à froid T_{PF,} mesurée en °C selon la norme DIN EN 1109, et dont la borne supérieure est la température bille anneau T_{BA}, mesurée en °C selon la norme DIN EN 1427, du type de celles comprenant au moins un bitume B, au moins un polymère D réticulable ou non réticulable et éventuellement au moins une charge C.

2. Utilisation selon la revendication 1, d'au moins un ester EP à titre d'agent promoteur de la viscosité à chaud et/ou de la résistance à la fissuration thermique à froid de ladite composition bitume-polymère anhydre.

3. Utilisation selon la revendication 1 ou 2, **caractérisée en ce que** l'ester EP est un ester d'acide orthophosphorique (phosphorique), pyrophosphorique, ou métaphosphorique (polyphosphorique).

4. Utilisation selon la revendication 1, 2 ou 3, **caractérisée en ce que** l'ester EP comprend au moins un monoester et/ou au moins un polyester d'acide phosphorique et d'au moins un alcool gras, ce dernier étant de préférence choisi parmi ceux comprenant au moins un bloc alkyle et au moins un bloc polyoxyde d'alkylène, et mieux encore polyoxyde d'éthylène et/ou de propylène.

5. Utilisation selon l'une quelconque des revendications précédentes, **caractérisée en ce que** l'ester EP répond à la formule générale (I) suivante: 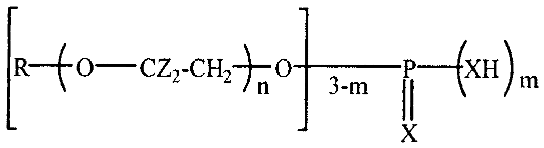 dans laquelle: les radicaux X identiques ou différents entre eux correspondent à un atome d'oxygène; les radicaux Z identiques ou différents entre eux correspondent à l'hydrogène ou -CH₃ ; m = 0, 1 ou 2 ; n = 0 ou un nombre entier allant de 1 à 10 ; et R est une chaîne hydrocarbonée, de préférence une chaîne aliphatique linéaire ou ramifiée saturée ou insaturée, et, plus préférentiellement encore une chaîne comprenant soit au moins un groupe alkyle saturé ou insaturé comportant une ou plusieurs insaturations et un nombre d'atomes de carbone compris entre 6 et 24 (de préférence 13 et 20), soit au moins un groupe phényle, soit encore au moins l'un des groupes précédents substitués.

6. Utilisation selon la revendication 5, dans laquelle la ou les chaîne(s) hydrocarbonée(s) de l'ester possède(nt) un nombre de groupements alcoxy -de préférence éthoxy- compris entre 3 et 6.

7. Utilisation selon la revendication 5 ou 6, dans laquelle au moins une chaîne hydrocarbonée de l'ester comprend de 15 à 18 atomes de carbone.

8. Utilisation selon l'une quelconque des revendications précédentes, **caractérisée en ce que** l'ester EP est un ester phosphorique qui possède un indice d'acide compris entre 90 et 240 et un point d'éclair (mesuré selon la norme NFM 07-019, en vase clos) compris entre 200 et 230° C.

9. Utilisation selon l'une quelconque des revendications précédentes, dans laquelle l'ester EP est mis en oeuvre à un taux inférieur ou égal à 5 % en poids par rapport à la base bitume B et, de préférence, compris entre 0,01 et 2 %; et mieux encore entre 0,05 et 1 %, en poids par rapport à la base bitume B.

10. Utilisation selon l'une quelconque des revendications précédentes, dans laquelle la composition bitume-polymère anhydre présente :
■ une température de ramollissement T_{BA} (mesurée en °C selon la norme DIN EN 1427), telle que : 80 ≤ T_{BA} ≤ 150, de préférence 100 ≤ T_{BA} ≤ 130;
■ et/ou une température de pliabilité à "froid" T_{PF} (mesurée en °C selon la norme DIN EN 1109) telle que : T_{PF} < -10, de préférence -50 ≤ T_{PF} < -10, et, plus préférentiellement encore -35 ≤ T_{PF} ≤ -15.

11. Utilisation selon l'une quelconque des revendications précédentes, dans laquelle le bitume B a une température de ramollissement T_{BA} (mesurée en °C selon la norme DIN EN 1427) telle que: 35 ≤ TBA ≤ 80.

12. Utilisation selon l'une quelconque des revendications précédentes, dans laquelle le polymère D consiste en un ou plusieurs copolymères choisis parmi les copolymères séquencés, avec ou sans charnière statistique, de styrène et de butadiène, de styrène et d'isoprène, de styrène et de chloroprène, de styrène et de butadiène carboxylée, ou encore de styrène et d'isoprène carboxylée.

13. Utilisation selon l'une quelconque des revendications précédentes, dans laquelle la composition bitume-polymère anhydre est sous forme de mastic bitume-polymère comprenant au moins une charge C

## Claims

1. Use of at least one phosphoric ester EP to extend the range of plasticity of an anhydrous bitumen-polymer composition, i.e. the range of which the lower limit is the cold bending temperature T_{PF}, measured in °C in accordance with standard DIN EN 1109, and of which the upper limit is the ring and ball temperature T_{BA} measured in °C in accordance with standard DIN EN 1427, of the type covering those comprising at least one bitumen B, at least one polymer D, which may be cross-linkable or non-cross linkable, and optionally at least one filler C.

2. Use as claimed in claim 1, of at least one ester EP as an agent promoting the hot viscosity and/or the cold fracture resistance of said anhydrous bitumen-polymer composition.

3. Use as claimed in claim 1 or 2, **characterised in that** the ester EP is an orthophosphoric (phosphoric), pyrophosphoric or metaphosphoric (polyphosphoric) acid ester.

4. Use as claimed in claim 1, 2 or 3, **characterised in that** the ester EP comprises at least one monoester and/or at least one phosphoric acid polyester and at least one fatty alcohol, the latter preferably being selected from those comprising at least one alkyl block and at least one alkylene polyoxide block, and even better ethylene and/or propylene polyoxide.

5. Use as claimed in any one of the preceding claims, **characterised in that** the ester EP satisfies the following general formula (I): 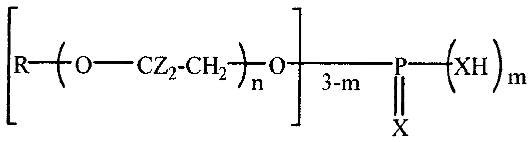 in which: the radicals X, the same as or different from one another, correspond to an oxygen atom; the radicals Z, the same as or different from one another, correspond to hydrogen or -CH₃; m = 0, 1 or 2; n = 0 or a whole number ranging from 1 to 10; and R is a hydrocarbon chain, preferably a saturated or unsaturated, linear or branched aliphatic chain and even more preferably a chain comprising either at least one saturated or unsaturated alkyl group having one or more unsaturations and a number of carbon atoms ranging between 6 and 24 (preferably 13 and 20), or at least one phenyl group, or alternatively at least one of the preceding groups substituted.

6. Use as claimed in claim 5, in which the hydrocarbon chain(s) of the ester comprise(s) a number of alkoxy - preferably ethoxy - groups ranging between 3 and 6.

7. Use as claimed in claim 5 or 6, in which at least one hydrocarbon chain of the ester has 15 to 18 carbon atoms.

8. Use as claimed in any one of the preceding claims, **characterised in that** the ester EP is a phosphoric ester which has an acid index of between 90 and 240 and a flash point (measured in accordance with standard NFM 07-019, closed cup) of between 200 and 230°C.

9. Use as claimed in any one of the preceding claims, in which the ester EP is used in a quantity of less than or equal to 5 % by weight relative to the bitumen base B, and preferably between 0.01 and 2%, and even better between 0.05 and 1%, by weight relative to the bitumen base B.

10. Use as claimed in any one of the preceding claims, in which the anhydrous bitumen-polymer composition has:
● a softening temperature T_{BA} (measured in °C in accordance with standard DIN EN 1427) such that: 80 ≤ T_{BA} ≤ 150, preferably 100 ≤ T_{BA} ≤ 130;
● and/or a cold bending temperature T_{PF} (measured in °C in accordance with standard DIN EN 1109) such that T_{PF} < -10, preferably -50 ≤ T_{PF} < -10, and, even more preferentially -35 ≤ T_{PF} ≤ -15.

11. Use as claimed in any one of the preceding claims, in which the bitumen B has a softening temperature T_{BA} (measured in °C in accordance with standard DIN EN 1427) such that: 35 ≤ T_{BA} ≤ 80.

12. Use as claimed in any one of the preceding claims, in which the polymer D consists of one or more copolymers selected from the sequenced copolymers, with or without statistical hinge, of styrene and butadiene, styrene and isoprene, styrene and chloroprene, styrene and carboxylated butadiene or alternatively styrene and carboxylated isoprene.

13. Use as claimed in any one of the preceding claims, in which the anhydrous bitumen-polymer composition is in the form of bitumen-polymer mastic containing at least one filler C.

## Patentansprüche

1. Verwendung mindestens eines Phosphorsäureesters (EP), um den Plastizitätsbereich einer Anhydrid-Bitumen-Polymer-Mischung zu erweitern, das heißt den Bereich, dessen Untergrenze die kalte Faltbarkeitstemperatur (T_{pf}) ist, die in °C gemäß der Norm DIN EN 1109 gemessen wird, und dessen Obergrenze der Erweichungspunkt Ring und Kugel (EP_{RUK}) ist, der in °C gemäß der Norm DIN EN 1427 gemessen wird, wobei die Mischung des Typs umfassend mindestens ein Bitumen (B), mindestens ein vernetzbares oder nicht vernetzbares Polymer (D) und gegebenenfalls mindestens eine Ladung (C) ist.

2. Verwendung nach Anspruch 1 mindestens eines Esters (EP) als Promotor der Hochtemperaturviskosität und/oder der thermischen Rissbildungsbeständigkeit bei niedrigen Temperaturen der Anhydrid-Bitumen-Polymer-Mischung.

3. Verwendung nach Anspruch 1 oder 2 **dadurch gekennzeichnet, dass** der Ester (EP) ein Orthophosphorsäureester (Phosphorsäureester), ein Pyrophosphorsäureester oder ein Metaphosphorsäureester (Polyphosphorsäureester) ist.

4. Verwendung nach Anspruch 1, 2 oder 3, **dadurch gekennzeichnet, dass** der Ester (EP) mindestens einen Monoester und/oder mindestens einen Phosphorsäurepolyester und mindestens einen Fettalkohol umfasst, wobei letzterer vorzugsweise aus jenen ausgewählt wird, die mindestens einen Alkylblock und mindestens einen Alkylenpolyoxidblock und besonders bevorzugt Ethylenpolyoxid und/oder Propylenpolyoxid umfassen.

5. Verwendung nach einem vorherigen Ansprüche, **dadurch gekennzeichnet, dass** der Ester (EP) der folgenden generellen Formel (I) entspricht: 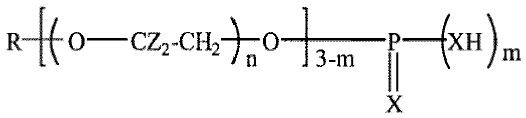 wobei: die Reste X identisch oder unterschiedlich untereinander sind und einem Sauerstoffatom entsprechen; die Reste Z identisch oder unterschiedlich untereinander sind einem Wasserstoffatom oder -CH₃ entsprechen; m = 0, 1 oder 2; n = 0 oder eine ganze Zahl von 1 bis 10; und R eine Kohlenstoffwasserkette ist, vorzugsweise eine gesättigte oder ungesättigte, lineare oder verzweigte aliphatische Kette ist, und besonders bevorzugt eine Kette, die entweder mindestens eine gesättigte oder ungesättigte Alkylgruppe umfasst, die einfach oder mehrfach ungesättigt ist und eine Anzahl von Kohlenstoffatomen zwischen 6 und 24 (vorzugsweise 13 und 20) aufweist, oder mindestens eine Phenylgruppe oder mindestens eine der vorherigen Gruppen in substituierter Form.

6. Verwendung nach Anspruch 5, **dadurch gekennzeichnet, dass** die Kohlenwasserstoffkette(n) des Esters eine Anzahl von Alkoxygruppen - vorzugsweise Ethoxygruppen - zwischen 3 und 6 umfasst/umfassen.

7. Verwendung nach Anspruch 5 oder 6, **dadurch gekennzeichnet, dass** mindestens eine Kohlenwasserstoffkette des Esters 15 bis 18 Kohlenstoffatome aufweist.

8. Verwendung nach einem beliebigen der vorherigen Ansprüche, **dadurch gekennzeichnet, dass** der Ester (EP) ein Phosphorsäureester ist, der eine Säurezahl zwischen 90 und 240 und einen Flammpunkt (entsprechend der Norm MFN 07-019 in einem geschlossenen Behälter gemessen) zwischen 200 und 230 °C aufweist.

9. Verwendung nach einem beliebigen der Ansprüche der vorherigen Ansprüche, **dadurch gekennzeichnet, dass** der Ester (EP) mit weniger oder gleich 5 Masse% in Bezug auf das Bitumen (B) eingesetzt wird, vorzugsweise zwischen 0,01 und 2 Masse% und insbesondere bevorzugt zwischen 0,05 und 1 Masse% in Bezug auf das Bitumen (B).

10. Verwendung nach einem beliebigen der vorherigen Ansprüche, **dadurch gekennzeichnet, dass** die Anhydrid-Bitumen-Polymer-Mischung aufweist:
- einen Erweichungspunkt EP_{RUK} (gemessen in °C entsprechend der Norm DIN EN 1427) derart, dass: 80 ≤ EP_{RUK} ≤ 150, vorzugsweise 100 ≤ EP_{RUK} ≤ 130;
- und/oder eine kalte Faltbarkeitstemperatur T_{pf} (gemessen in °C entsprechend der Norm DIN EN 1109) derart, dass: T_{pf} < -10, vorzugsweise -50 ≤ T_{pf} < -10, und insbesondere bevorzugt -35 ≤ T_{pf} ≤ -15.

11. Verwendung nach einem beliebigen der vorherigen Ansprüche, **dadurch gekennzeichnet, dass** das Bitumen (B) einen Erweichungspunkt EP_{RUK} (gemessen in °C entsprechend der Norm DIN EN 1427) hat derart, dass: 35 ≤ EP RUK ≤ 80.

12. Verwendung nach einem beliebigen der vorherigen Ansprüche, **dadurch gekennzeichnet, dass** das Polymer D aus einem oder mehreren Copolymeren besteht, die ausgewählt werden aus sequenzierten Copolymeren mit oder ohne statistischer Verteilung von Styrol und Butadien, von Styrol und Isopren, von Styrol und Chloropren, von Styrol und carboxyliertem Butadien, oder von Styrol und carboxyliertem Isopren.

13. Verwendung nach einem beliebigen der vorherigen Ansprüche, **dadurch gekennzeichnet, dass** die Anhydrid-Bitumen-Polymer-Mischung als Bitumen-Polymer-Spachtelmasse vorliegt, die mindestens eine Ladung (C) aufweist.
